Europäisches Patentamt

**European Patent Office**

Office européen des brevets

(11) Publication number: **0 162 117**
**A1**

## (12) EUROPEAN PATENT APPLICATION

(21) Application number: **84101247.9**

(22) Date of filing: **07.02.84**

(51) Int. Cl.⁴: **B 65 D 8/00**
**B 29 C 65/00**

(43) Date of publication of application:
**27.11.85 Bulletin 85/48**

(84) Designated Contracting States:
**AT BE CH DE FR GB IT LI LU NL SE**

(71) Applicant: **Verlinden, Marius A.J.**
**Panorama Tower - App. 7 CD Esmoreitlaan 1 P.B. 43**
**B-2050 Antwerpen(BE)**

(72) Inventor: **Verlinden, Marius A.J.**
**Panorama Tower - App. 7 CD Esmoreitlaan 1 P.B. 43**
**B-2050 Antwerpen(BE)**

(74) Representative: **Strasse, Joachim, Dipl.-Ing. et al,**
**Strasse und Stoffregen European Patent Attorneys**
**Zweibrückenstrasse 17**
**D-8000 München 2(DE)**

(54) Beer keg and method of making it.

(57) A method of manufacturing an approximately cylindrical
beer keg, which comprises the following steps, is proposed:
Injection moulding of two halves of a beer keg (10,12) of
high density polyethylene or high density polypropylene,
which are each moulded into the form of a circular cylinder
and have the same diameters and closed front surfaces
(14,16), the cylinder jackets of the two beer keg halves (10,12)
having approximately the same lengths;
clamping the beer keg halves (10,12) into a holding means
such that the cener lines of the beer keg halves of the form
of a circular cylinder coincide and the closed front surfaces
(14,16) of the beer keg halves are averted from each other;
face -planing of the facing edges (56) of the beer keg halves;
contract-free introduction of the heating elements of a butt-
welding machine into the free space between the facing
edges of the beer keg halves; and pressing the facing edges
against each other.

FIG. 3

Marius A. J. Verlinden
2050 Antwerpen (Belgium)

München, 7th February, 1984
dt 14 452

Beer Keg And Method Of Manufacturing It

The invention relates to a method of manufacturing an approximately cylindrical keg, in particular a beer keg, and to such beer keg. For a long time, there has been the need for making also beer kegs from plastic material. Acryl butadiene styrene formerly employed, however, has proved to be of little suitability for beer kegs, as chemical reactions with beer which affect the beer's quality take place. As a result, the U.S. Food and Drug Administration prohibited the use of such material for making kegs.

On the other hand, the fundamental problem of beer kegs made from plastic material is that owing to the closed structure of the keg conventional injection moulding techniques have not been suited to manufacture a single-piece keg. Rather has it been necessary to make two separate keg parts by injection moulding, which have been welded thereafter, the one part of the beer keg having approximately the shape of a cup and the second part forming the accessory cover (DE-OS 24 42 343). This method has i.a. the disadvantage of that in the ultrasonic spot welding method applied here a multitude of spot weldings which as such do not effect a sealing of the keg must be carried out. Rather must an additional seal ring be introduced between the parts of the beer keg to be joined.

As against this the object underlying present invention is to provide a method of manufacturing a beer keg, which makes the making of beer kegs at low cost possible. Above all, the method is also meant to be suited for making the manufacturing of beer kegs of different sizes (lengths) possible without expensive readjustments and changes in the apparatus serving to carry out the method. The so-prepared beer keg is intended to have a long lifetime and a high resistance to damages. Further, the beer keg is to have a low weight and good heat-insulating properties. Moreover, the keg is to make only little noise when rolling and to make a simple and effective cleaning possible.

According to the invention these problems are solved by a method of manufacturing an approximately cylindrical beer keg, comprising the following steps:

a) injection moulding of two halves of a beer keg of high density polyethylene or high density polypropylene, which are each moulded into the form of a circular cylinder and have the same diameters and closed front surfaces, the cylinder jackets of the two beer keg halves having approximately the same lengths;

b) clamping the beer keg halves into a holding means such that the center lines of the circular-cylindrical beer keg halves coincide and the closed front surfaces of the beer keg halves are averted from each other;

c) face-planing the facing edges of the beer keg halves;

d) contact-free introduction of the heating elements of a butt-welding machine into the free space between the facing edges of the beer keg halves; and

e) pressing the facing edges against each other.

Said method, in particular, renders the manufacture of kegs of different lengths possible, as the beer keg halves can be welded in different lengths, no substantial change in the method being necessary.

Moreover, the high density polyethylene and the high density polypropylene have very good heat insulating properties and are odourless as well as neutral in taste. The keg manufactured according to the invention, of course, is not only suited for beer but may receive any refreshing drinks whatsoever, including wine or the like.

In an advantageous embodiment of the invention it is provided that additional steps, i.e.

coating the beer keg's interior with a glass-like epoxy resin of similar elasticity like that of the keg wall;

radiating the keg's interior with an ultraviolet light source;

introducing the keg into a heating means,

be taken. Owing to this the interior space of the keg can most advantageously be adapted to a multitude of liquids, and the surface quality can even be heightened.

In another advantageous embodiment of the invention the removal of that part of the welding seam which stands over into the keg's interior is carried out in addition. This facilitates a successive coating according to claim 2 and, independently thereof, the later cleaning of the keg as inside it is completely smooth.

Further, the ready-made keg may be subjected to an aftertreatment by cobalt radiation, a partial change in the molecular structure combined with an increase in strength ensuing therefrom (cross-linking) being resultant. Then, the material has a memory, i.e. after deformation it will rather return into its former position.

In an advantageous embodiment of the invention a bung hole housing which is provided with a collar projecting into the keg for supporting the extractor tube is injection-moulded integrally with a front surface of the beer keg. The use of the high density polyethylene or the high density polypropylene also renders the one-piece formation of a bung hole housing with the keg walling possible and, thus, saves the welding-on of the housing conventional, hitherto.

The cleaning of beer kegs represents a particular problem and must be investigated separately for each keg material, as the chemical interactions between the beer and the keg wall are substantially dependent on the material. For this the interior can be coated with a glass-like layer.

Experience showed that for cleaning beer kegs made from high density polyethylene or high density polypropylene water containing ozone is particularly suited. The cleaning with ozone-containing water has proved successful with the beer kegs made from high density polyethylene or high density polypropylene according to the invention especially for the reason that inside these kegs have smooth surfaces and there are no sharp edges or beads. Preferably, the ozone-containing water is applied for 10 to 20 sec. at high pressure in the form of a water jet onto the inner walls of the beer keg. Here, the water has been purified as far as possible from heavy metals, such as iron or manganese and has a pH value less than or 7.

What is especially favourable is the combination of the cleaning by ozone-containing water and the simultaneous action of ultrasonics, the chemical cleaning, thus, being supported by a mechanical removal of dirt; and optionally by further measures, such as ionization or the employment of biochemicals.

In the following the particulars of a beer keg manufactured according to the method of the invention are described. Here,

fig. 1 shows a partial section through a beer keg manufactured according to the invention; and

fig. 2 a section through an accessory bung hole.

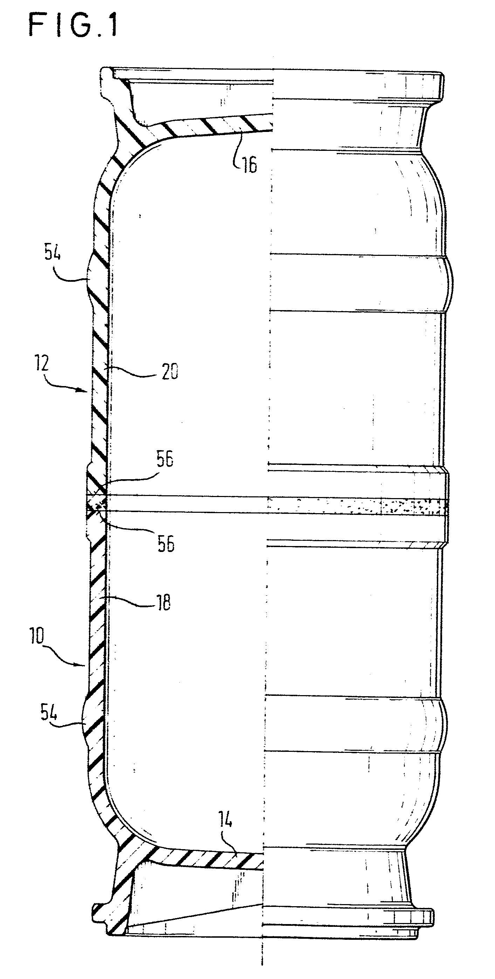

Fig. 1 shows a section along the center line of the substantially cylindrical beer keg. Two beer keg halves 10,12 firstly are injection-moulded separately. The two separate beer keg halves 10 and 12 each have the form of a cup. The two keg halves 10 and 12 consist of high density polyethylene or high density polypropylene. Their cross-sections are those of circular cylinders and have the same diameter each. Front surfaces 14,16 are closed throughout, one of the front surfaces receiving the bung hole which will be described more below. In present example of embodiment the cylinder jackets of beer keg halves 10,12 have approximately the same height. On the exterior of cylindrical wallings 18,20 of beer keg halves 10,12 there are provided roller bands 54 for rolling away the beer keg.

For manufacturing the closed beer keg the two beer keg halves 10 and 12 are clamped into a means so as to make their center lines coincide. Walls 18,20 of beer keg halves 10 and 12 are in alignment. Walling 18 or 20, resp., is thickened within the range of the facing edges 56 of beer keg halves 10 and 12. The beer keg halves 10 and 12 coaxially clamped then are face-planed or face-milled on their edges 56. Thereafter, heating elements of a butt-welding machine are introduced into the free space between edges 56 of beer keg wallings 18 resp. 20, which plastify beer keg wallings 18 and 20 within the range of their edges 56. Upon removal of the heating elements of a butt-welding machine (not shown) the beer keg halves are pressed against each other till welding is terminated, the pressing lasting most typically about 20 min. at a wall thickness of 10 to 12 mm.

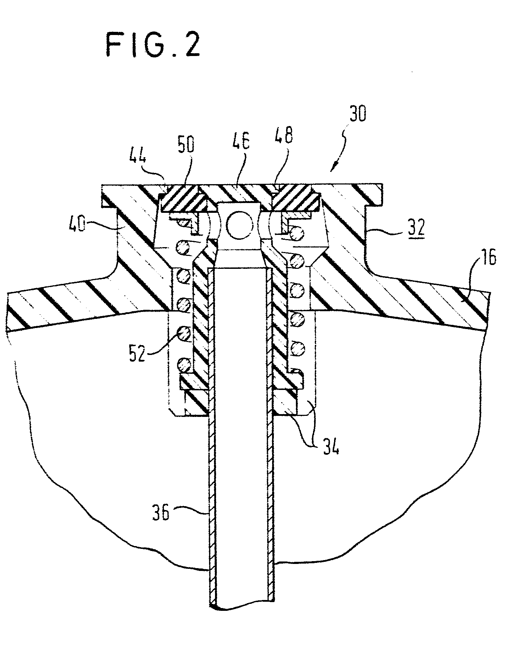

Fig. 2 shows a section through bung hole 30 provided in one of the front surfaces 16 of the so-manufactured beer keg. Bung hole housing 32 is injection-moulded integrally with front surface 16 of one of beer keg halves 12, no special welding for the bung hole housing being, therefore, necessary.

Bung hole housing 32 shows a collar 34 projecting into the keg, on the one hand, and a second keg 40 projecting outwardly, on the other. Collar 34 projecting into the keg supports extractor tube 36, while the second collar 40 projecting outwardly is provided with projecting rim 44 on its inner edge, rim 44 being faced by another rim 48 projecting from head 46 of extractor tube 36, such that seal 50 is to be disposed below projecting rims 44,48. Seal 50 is pressed by means of spiral spring 52, which is supported by collar 34 projecting into the keg, against projecting rims 44,48.

In the example of embodiment according to fig. 1 the welding seam between the two beer keg halves 10 and 12 is provided between the roller bands 54 thereof. In particular in the case of smaller kegs it is even possible to provide the seam between the beer keg halves within the range of a roller band 54, the thickening thereof serving as a welding edge at the same time.

An alternative method of coating the interior wall of the keg comprises the steps of
- filling into the keg a solution of PVDC;
- applying a pressure of typically II bars to the keg; and
- removing excess PVDC fluid and reconditioning of the kegs in an oven. Kegs are preferably moved slowly during the heat treatment and stay in the oven for some time.

For the alternative coating method, too, a cobalt radiation scheme can be subsequently employed, leading to a cross-linking.

The features given expression to in the foregoing specification, the claims and the drawing can be essential for the embodiment of the invention, both individually and in any combination whatsoever.

The method of making a keg, and a keg made accordingly, where the keg has an oval instead of a circular cross section yields a certain advantage if the kegs are to be handled, in actual use, by a fork lifter or similar devices.

Marius A. J. Verlinden
2050 Antwerpen (Belgium)

München, 7th February, 1984

dt 14 452

Beer Keg And Method Of Manufacturing It

P a t e n t   C l a i m s

1. A method of manufacturing an approximately cylindrical keg, in particular a beer keg, c h a r a c t e r i z e d   b y following steps:

a) injection moulding of two halves of a beer keg of high density polyethylene or high density polypropylene, which are each moulded into the form of a circular cylinder and have the same diameters and closed front surfaces, the cylinder jackets of the two beer keg halves having approximately the same lengths;

b) clamping the beer keg halves into a holding means such that the center lines of the circular-cylindrical beer keg halves coincide and the closed front surfaces of the beer keg halves are averted from each other;

c) face-planing the facing edges of the beer keg halves;

d) contact-free introduction of the heating elements of a butt-welding machine into the free space between the facing edges of the beer keg halves; and

e) pressing the facing edges against each other.

- 2 -                                      **0162117**

2. The method according to claim 1,
   c h a r a c t e r i z e d    i n
   that additional steps
   f) lining the interior of the beer keg with a glass-like
      epoxy resin of similar elasicity like that of the
      keg wall;

   g) radiation of the keg's interior by an ultraviolet
      light source;

   h) introduction of the keg into a heating means
   are provided.

3. The method according to claim 1 and/or claim 2,
   c h a r a c t e r i z e d    i n
   that as an additional step the removal of the welding
   seam standing over into the keg's interior is provided.

4. The method according to claim 1 or 2,
   c h a r a c t e r i z e d    i n
   that the wall thickness of the beer keg halves is larger
   within the range of the edges to be welded than within
   the range of the other wall surfaces.

5. The method according to one or several of the claims 1
   through 4,
   c h a r a c t e r i z e d    i n
   that the wall thickness of the beer keg is 1.4 cm within
   the range of the edges to be welded, while it is in the
   main 1 cm within the range of the rest of the beer keg.

6. The method according to one or several of the preceding
   claims,

characterized in
that the edges to be welded form a roller bar for the beer keg.

7. The method according to any of the preceding claims, characterized in
that the beer keg is provided with a layer reflecting light and ultraviolet radiation.

8. A beer keg, characterized in
that it is joined by two beer keg halves (10, 12) which are injection moulded from high density polyethylene or high density polypropylene such that they are formed each into circular cylinders and have the same diameters and closed front surfaces (14,16), the cylinder jackets (18,20) of said two beer keg halves (10,12) having approximately the same lengths.

9. The beer keg according to claim 8, characterized in
that a bung hole (30) is disposed in one of front surfaces (16).

10. The beer keg according to one of the claims 8 or 9, characterized in
that a bung hole housing (32) is injection moulded integrally with front surface (16) of one of beer keg halves (12), which is provided with a collar (34) projecting into the keg for supporting extractor tube (36).

11. The beer keg according to claim 10, characterized in

that bung hole housing (32) has a second collar (40) outwardly projecting from front surface (16) and provided with a projecting rim (44) on its inner edge (42); that head (46) of extractor tube (36) is provided with projecting rim (48), and that a seal (50) is pressed below projecting rims (44,48).

12. The beer keg according to claim 11,
c h a r a c t e r i z e d   i n
that seal (50) is pressed below projecting rims (44,48) by means of spiral spring (52) supported by collar (34) projecting into the keg.

13. A method of cleaning a beer keg made of high density polyethylene or high density polypropylene,
c h a r a c t e r i z e d   i n
that ozone-containing water acts upon the inner wall of the beer keg for about 10 to 20 sec..

14. The method according to claim 13,
c h a r a c t e r i z e d   i n
that the ozone-containing water has a temperature of less than 35°C.

15. The method according to one or more of claims 13 to 14,
c h a r a c t e r i z e d   i n
that heavy metals, such as e.g. iron or manganese have been removed from the water.

16. The method according to one or several of claims 13 to 15,
c h a r a c t e r i z e d   i n
that the pH value of the ozone-containing water is neutral or weakly acidic.

**0162117**

17. The method according to one or several of claims 13 to 16,

 c h a r a c t e r i z e d   i n

 that a splash pressure within the range of 2.5 - 3.0 bar is provided for the ozone-containing water.

18. The method according to one or several of claims 13 to 17,

 c h a r a c t e r i z e d   i n

 that the concentration of ozone is about 0.3 - 0.4 mg/L

19. The method according to one or several of claims 13 to 18,

 c h a r a c t e r i z e d   i n

 that an additional cleaning by the action of ultrasonics is provided.

20. The method according to one or several of claims 13 to 19,

 c h a r a c t e r i z e d   i n

 that in addition an ionization and/or biochemicals are provided.

21. The method according to one or several of claims 1 to 7,

 c h a r a c t e r i z e d   i n

 that the beer keg is radiated by a cobalt radiation source.

22. The method according to one or several of claims 1, 3 to 7,
c h a r a c t e r i z e d   i n
that additional steps are provided:
f') filling into the keg a solution of P.V.D.C. (Polyvenylidenchlorid) (ICI VICLAN);
g') applying a pressure of ten bars or more to the keg;
h') introducing keg into a heating means.

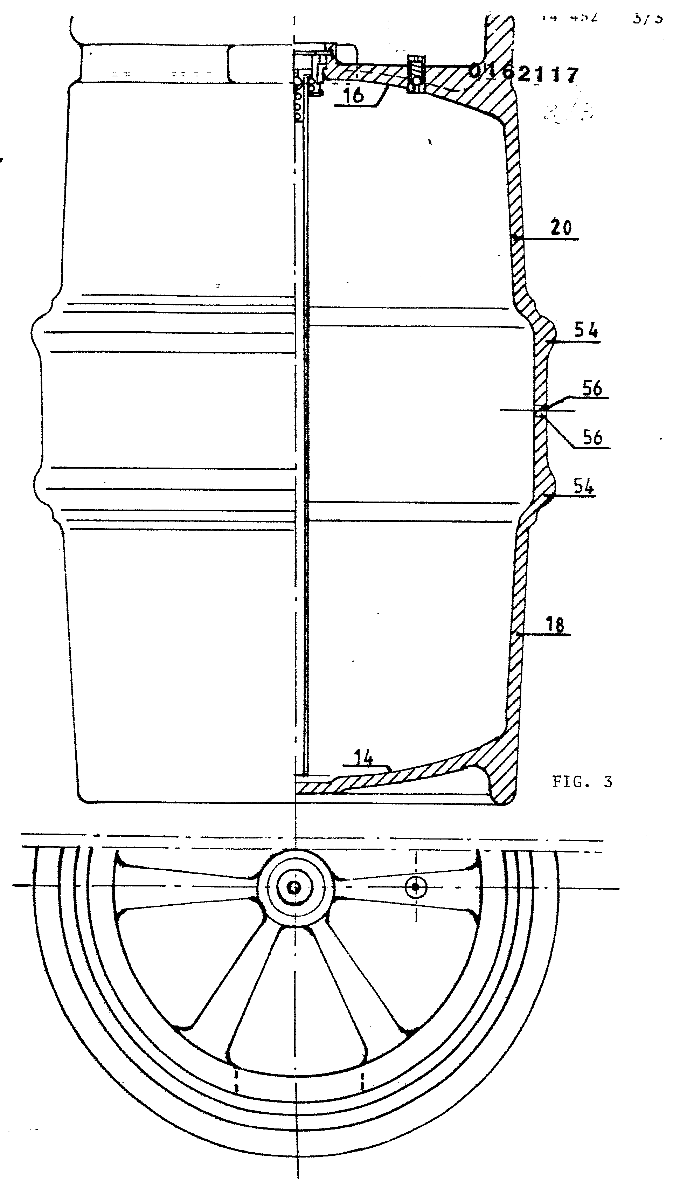

23. The method according to one or several of claims 1 to 7 and/or 21, 22
c h a r a c t e r i z e d   i n
that the keg has an oval cross section (Fig. 3).

24. A beer keg, produced by the method according to one or several of claims 1 to 7, 21 to 22.

## FIG.1

0162117

FIG.2

FIG. 3

EP 84 10 1247

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | BE - A - 887 814 (VERLINDEN)<br><br>* figure 1; page 5, lines 8-10 *<br><br>-- | 16,23, 24 | B 65 D   8/00<br>B 29 C 65/00 |
| Y | DE - U - 7 425 376 (DYNAMIT NOBEL AG.)<br><br>* figures 1,2; page 1, lines 1-6 *<br><br>-- | 1,6,23, 24 | |
| X | FR - A - 2 133 658 (CHEMISCHE WERKE HULS AG.)<br><br>* figure 1; page 3, lines 17-25 *<br><br>-- | 8-10 | |
| | FR - A - 2 314 104 (BAUMLIN) | | **TECHNICAL FIELDS SEARCHED (Int. Cl. ³)** |
| A | * figure 1; page 1, lines 21-25 * | 1,4 | |
| X | | 8 | |
| | -- | | B 65 D<br>B 29 C |
| A | GB - A - 1 516 133 (GKN JANKEY LTD)<br><br>* figures; page 2, lines 20-27, lines 34-36; lines 89-97 *<br><br>-- | 1,7,9, 10,23 24 | |
| A | GB - A - 1 090 723 (AINSIE & CIE. LTD.)<br><br>* figures; page 2, lines 124-129 *<br><br>------ | 2,6,8- 11,23, 24 | |

~~The present search report has been drawn up for all claims~~

| Place of search | Date of completion of the search | Examiner |
|---|---|---|
| The Hague | 02-10-1984 | STEEGMAN |

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit The present European search report has been drawn up for the first ten claims and for those claims for which claims fees have been paid,

namely claims:

☐ No claims fees have been paid within the prescribed time limit. The present European search report has been drawn up for the first ten claims.

## ⊠ LACK OF UNITY OF INVENTION

The Search Division considers that the present European patent application does not comply with the requirement of unity of invention and relates to several inventions or groups of inventions,
namely:

1. Claims 1-7,21-24:  Method of manufacturing a beer keg

    Claims 8-12     :  a beer keg

2. Claims 13-20     :  method of  cleaning

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

⊠ None of the further search fees has been paid within the fixed time limit. The present European search report has been drawn up for those parts of the European patent application which relate to the invention first mentioned in the claims,

namely claims: 1-7,8-12,21-24